# EUROPEAN PATENT SPECIFICATION

(11) **EP 2 161 871 B1**
(45) Date of publication and mention of the grant of the patent: **10.07.2013**
(21) Application number: 09014647.3
(22) Date of filing: 23.10.2006
(51) Int. Cl.: H04L 5/00, H04W 72/12

(54) **Apparatus and method for channel scheduling in an OFDM system**
Vorrichtung und Verfahren zur Kanalplanung in einem OFDMA-System
Appareil et procédé de planification de canal dans des systèmes MDFO

(30) Priority: 21.10.2005 KR 20050099929; 14.09.2006 KR 20060088979
(43) Date of publication of application: 10.03.2010
(62) Divisional of application: 06022149.6
(73) Proprietor: Samsung Electronics Co., Ltd., Suwon-si, Gyeonggi-do, 443-742 (KR)
(72) Inventor: Kwon, Hwan-Joon, Suwon-si Gyeonggi-do (KR); Lee, Ju-Ho, Suwon-si Gyeonggi-do (KR); Kim, Yu-Chul, Suwon-si Gyeonggi-do (KR)
(74) Representative: Grünecker, Kinkeldey, Stockmair & Schwanhäusser

(56) References cited:
- EP-A- 1 257 140
- WO-A-2005/096538
- US-A1- 2004 001 429
- US-A1- 2004 082 356
- "Uplink enhancements for dedicated transport channels" INTERNET CITATION, [Online] XP002258819 Retrieved from the Internet: URL:http://www.3gpp.org/ftp/tsg_ran/WG1_RL 1/TSGR1_29/Docs/Zips/> [retrieved on 2003-10-22]

## Description

### BACKGROUND OF THE INVENTION

### Field of the Invention:

The present invention relates to channel scheduling technology in mobile communication systems. More particularly, the present invention relates to an apparatus and a method for selectively scheduling channels in mobile communication systems which adopt Orthogonal Frequency Division Multiple Access (OFDMA).

### Description of the Related Art:

Generally, uplink multiple access schemes used in mobile communication systems are largely classified into non-orthogonal multiple access and orthogonal multiple access. In a non-orthogonal multiple access scheme, the reverse signals, which are transmitted from a number of terminals, are not orthogonal to one another. Code Division Multiple Access (CDMA) affords an example of non-orthogonal multiple access.

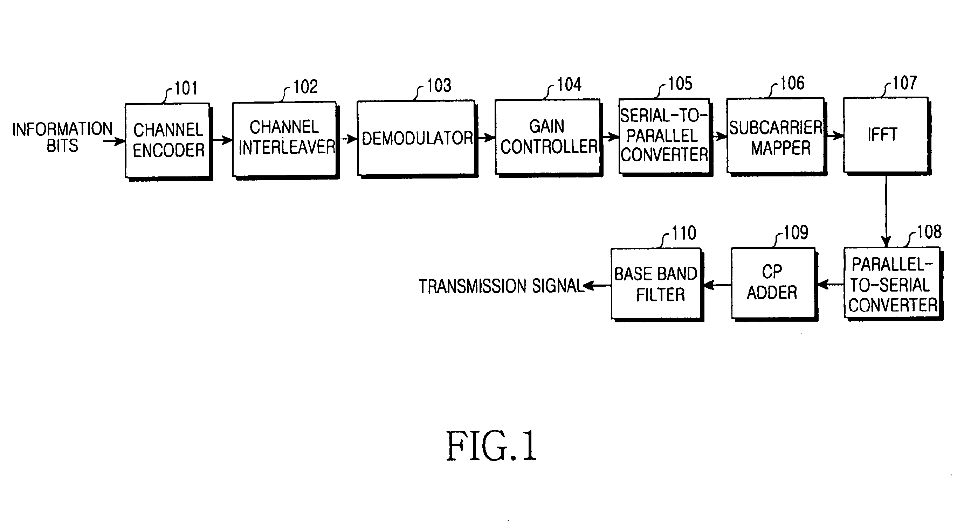

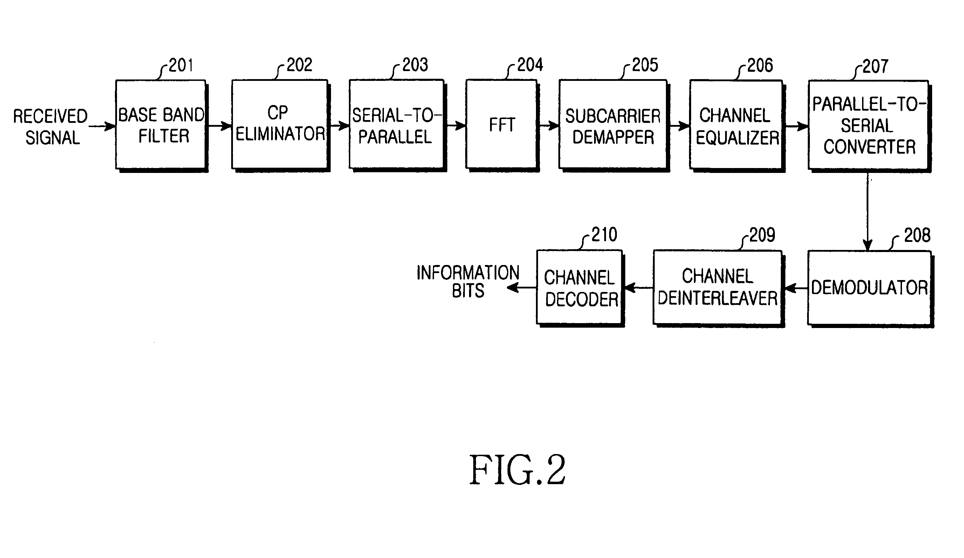

On the other hand, in an orthogonal multiple access scheme, the uplink signals, which are transmitted from a number of terminals, are orthogonal to one another. For example, schemes employing orthogonal multiple access include Frequency Division Multiple Access (FDMA) and Time Division Multiple Access (TDMA). In general packet data mobile communication systems, the orthogonal multiple access adopts a mixed form of Frequency Division Multiple Access (FDMA) and Time Division Multiple Access (TDMA). Namely, a number of transmissions which serve users are distinguished from one another in the frequency domain and in the time domain. Orthogonal Frequency Division Multiple Access (OFDMA) affords a typical example of the conventional Frequency Division Multiple Access. In the above OFDMA, a number of terminals transmit signals on sub-carriers which are different from one another, and therefore the respective signal of every terminal can be distinguished from one another. A transmitter-receiver which adopts OFDMA will be described hereinafter with reference to FIGS. 1 and 2.

FIG. 1 shows a transmitter in a mobile communication system which adopts the conventional OFDMA. Referring to FIG. 1, the respective queue of information bits, which needs to be transmitted, is input to a channel encoder 101. The channel encoder 101 carries out a channel-encoding function in a predetermined scheme with respect to the queue of information bits, and outputs a channel-encoded signal to a channel interleaver 102. The channel encoder 101 can be a block encoder, a convolution encoder, a turbo encoder, or a Low Density Parity Check (LDPC).

The channel interleaver 102, which receives the output of the channel-encoder 101, carries out a channel-interleaving function in the prescribed process, and outputs a channel-interleaved signal to a modulator 103. While omitted in FIG. 1, it is clear that a rate matching block consisting of a repeater and a puncturing unit can exist between the channel encoder 101 and the channel interleaver 102. The modulator 103, which receives the output of the channel interleaver 102, carries out the modulation process, and outputs modulated symbols to a gain controller 104. The above modulation process may include Quadrature Phase Shift Keying (QPSK), 8 Phase Shift Keying (PSK) and 16 Quadrature Amplitude Modulation (QAM). The gain controller 104 multiplies a gain determined by prescribed rules to each channel, and outputs a multiplied signal to a serial-parallel converter 105. The serial-parallel converter 105, which serially receives an output of the gain controller 104, converts the output into a parallel signal, and outputs the parallel signal to a subcarrier mapper 106. The subcarrier mapper 106, which receives in parallel the queues of information bits, maps the received queues to subcarriers by predetermined rules, and outputs mapped signals to an Inverse Fast Fourier Transform (IFFT) unit 107. The IFFT unit 107 is assumed to receive N number of symbols which are input in parallel. This assumption is based on the fact that the IFFT unit 107 transforms the queues of N number of information bits.

Therefore, symbols in the frequency domain are transformed into symbols in the time domain with the Inverse Fast Fourier Transformation process by the IFFT unit 107 which inputs N number of symbols in parallel. The symbols, which are transformed from the frequency domain to the time domain, are input to a parallel-serial converter 108. The parallel-serial converter 108, which receives in parallel the N number of symbols in the time domain, converts the received data to output sequentially the N number of queues of information bits. The N number of queues of information bits, which are sequentially output, are designated "OFDM symbols" hereinafter.

The OFDM symbols, which are output from the parallel-serial converter 108, are input to a Cyclic Prefix (CP) adder 109. The CP adder 109 reversely copies as many bits as the prescribed number from the last bits among the input OFDM symbols, and inserts the copied bits in front of the first bits of the OFDM symbols. Cyclic prefix symbols are added in order to eliminate an effect of multi-path channels. The OFDM symbols, to which the CP symbols are added, are output to a base band filter 110. The base band filter 110, which receives the OFDM symbols having the added CP, generates a base band signal which is thereafter received via a receiver on wireless channels. A configuration and operation of the receiver will be described hereinafter with reference to FIG. 2. FIG. 2 shows a block diagram of a receiver of a mobile communication system which adopts a general OFDMA.

The base band signal, which is received on the wireless channel, is processed by a base band filter 201. The base band filter 201 corresponds to a matched filter of the base band filter 110 of the transmitter. An output of the base band filter 201 is input to a CP eliminator 202. The CP eliminator 202 removes cyclic prefix symbols, which are polluted under the effect of multi-path, and outputs a serial signal after the CP is eliminated. Therefore, the serial output signal is input to a serial-parallel converter 203 in order to carry out fast Fourier transform. The serial-parallel converter 203 receives serially input symbols, and converts the serial symbols into a parallel signal having N number of units.

Conversion of the serial input symbols into output parallel signals in the unit of the N number is based on the Fourier transform that was performed in the unit of the N number by the transmitting block. Therefore, while inputting parallel data in the unit of the N number, a Fast Fourier Transform (FFT) unit 204 performs Fourier transform. Namely, the Fast Fourier Transform unit 204 transforms symbols in the time domain into symbols in the frequency domain. The symbols, which are transformed into the frequency domain, are input to a subcarrier demapper 205. The subcarrier demapper 205 extracts symbols from the symbols in the frequency domain to output subcarriers, which are mapped to the respective physical channels. Extracted subcarriers are input into a channel equalizer 206. While receiving the extracted subcarriers, the channel equalizer 206 performs a prescribed process of channel equalizing. While there exists many schemes for equalizing channels, these schemes do not belong to the scope of subject matter of the present invention. An output of the channel equalizer 206 is input to a parallel-serial converter 207. While receiving symbols in parallel, the parallel-serial converter 207 converts the parallel symbols into serial symbols. A demodulator 208 inputs the serial symbols, which are converted in the unit of the N number, and performs a prescribed demodulation process which includes 16 Quadrature Amplitude Modulation (QAM), 8 Phase Shift Keying (PSK) and Quadrature Phase Shift Keying (QPSK). An output signal of the demodulator 208 is input to a channel deinterleaver 209. While receiving a demodulated signal, the channel deinterleaver 209 performs a prescribed process of channel deinterleaving. An output signal of the channel deinterleaver 209 is input to a channel decoder 210. While inputting the deinterleaved signal, the channel demodulator 210 performs a prescribed process of channel demodulation to output the queues of information bits.

On the other hand, by selectively scheduling channels, uplink mobile communication systems can increase system capacity even under limited wireless resources. In the above, the uplink means a direction of transmission from terminals to the base station. In order to transmit data, technology for selectively scheduling channels selects a time interval or the frequency band of the superior channel among channels which vary on the time axis or on the frequency axis. Therefore, it means technology through which system capacity can be increased.

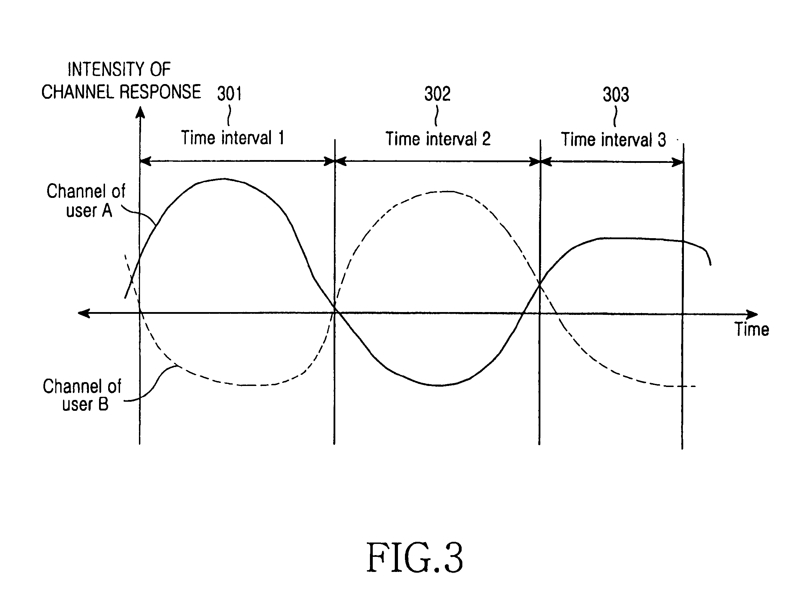

FIG. 3 shows an example of selectively scheduling channels on a time axis in a mobile communication system which adopts a general OFDM.

Referring to FIG. 3, a horizontal axis represents a time axis, and a vertical axis represents an intensity of channel responses. In FIG. 3, the solid line represents channel responses which can vary with the time of a user A, and the dotted line represents channel responses which can vary with the time of a user B. With reference to FIG. 3, whereas a channel of user A is superior to a channel of user B within time interval 1 301, the channel of user B is superior to the channel of user A within time interval 2 302. Within time interval 3 303, the channel of user A is superior to the channel of user B. With this understanding, by selectively scheduling channels on the time axis, data can be transmitted on the channel of user A within time interval 1 301, while data can be transmitted on the channel of user B within time interval 2 302. Within time interval 3 303, likewise, data can be transmitted on a channel of user A. As a result, technology that selectively schedules channels is able to increase system capacity.

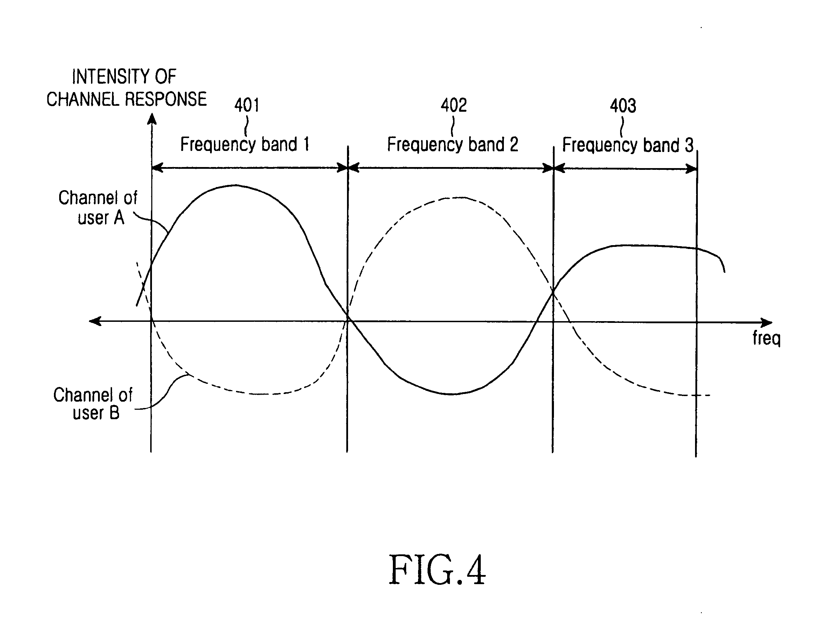

FIG. 4 shows an example of selectively scheduling channels on a frequency axis in a mobile communication system which adopts a general OFDM.

Referring to FIG. 4, a horizontal axis represents a frequency axis, and a vertical axis represents an intensity of channel responses. In FIG. 4, the solid line represents channel responses which can vary with the frequency of a user A, and the dotted line represents channel responses which can vary with the frequency of a user B. With reference to FIG. 4, while a channel of user A is superior to a channel of user B within frequency band 1 401, a channel of user B is superior to a channel of user A within frequency band 2 402. With this understanding, by selectively scheduling channels on the frequency axis, data can be transmitted on the channel of user A within frequency band 1 401 and data can be transmitted on the channel of user B within frequency band 2 402. Within frequency band 3 403, likewise, the data can be transmitted on a channel of user A. As a result, technology that selectively schedules channels is able to increase system capacity.

As described above with reference to FIGS. 3 to 4, technology is provided for selectively scheduling channels wherein a user can be selected whose intensity of channel response is the best on the time axis or on the frequency axis, and wherein data can be transmitted by the selected user. As a result, this technology is able to maximize system capacity even under limited wireless resources. Furthermore, in order that a scheduler of a base station may select a user (in other words, a terminal) whose intensity of channel response is the best among a number of terminals within any time interval or within any frequency band, and allow the terminal to transmit data, the scheduler of the base station can determine in advance the intensities of uplink channel responses of all the terminals. For that purpose, a scheme for transmitting the uplink pilot signal is used. For example, all the terminals in a system may backward transmit pilot signals continuously or in a specified period regardless of data transmission. The scheduler of the base station measures the quality of the pilot signals from a number of terminals in order to select a terminal whose channel is superior to others on the time axis or on the frequency axis, and allows a selected terminal to transmit real data.

The problem of the scheme wherein the channels of the terminals are selectively scheduled by measuring the quality of the pilot signals which are backward transmitted from the terminals, exists in that the mobile communication systems adopt orthogonal multiple access. Namely, as all the terminals in the mobile communication system adopting orthogonal frequency division multiplexing must backward transmit the pilot signals regardless of real data transmission, orthogonal resources are wasted. Orthogonal resources may include OFDM symbols on the time axis, and sub-carriers on the frequency axis.

Also, when there are many users (in other words, terminals) in a system, the orthogonal resources which can be utilized to transmit real data are not enough.

As described above, system capacity can be increased by selectively scheduling channels in mobile communication systems which adopt a general orthogonal frequency division multiplexing access. However, in order to support the selective scheduling of channels, a number of overheads would be required, so that efficient support programs must be established.

Accordingly, there is a need for an improved apparatus and method for selectively scheduling channels in a mobile communication system using OFDMA.

The publication titled "Enhancing the Uplink DSCH-Scheduling Opinions," 3GPP TSG-RAN1 # 29, R1-02-1322, dated November 2002, refers to several possible enhancements for uplink dedicated channel, where some of the concepts discussed are adaptive modulation and coding AMC, hybrid ARQ in the form of Chase or IR, fast scheduling in the Node B, and shorter frame sizes. Most of the techniques are aimed at reducing the latency and increasing the throughput while managing the interference within and between the sectors more efficiently. A discussion is provided for fast Node B controlled scheduling as well as autonomous transmission techniques in further detail assuming uplink power control always exists. One of the main advantages of Node B controlled scheduling is better resource management. On the uplink, this would imply better noise rise management. Considering other cell interference and noise rise due to signaling and power control services, a quantity which denotes the maximum available received power can be estimated that is tolerated from all data transmissions. This resource can then be shared between multiple data transmissions. At any given instant, the goal is to maintain the total noise rise above thermal to within a threshold. A resource management engine i.e. the scheduler can recite either at the Node B or at the RNC. As noted in the HSDPA, scheduling at the Node B has the advantage of lower latencies and can react faster to variance in general conditions.

US2004/001429A1 refers to dual mode shared OFDM methods/transmitters, receivers and systems. A wireless terminal and network terminal are provided for implementing an uplink OFDM protocol. In the protocol, the wireless terminal has a first transmit chain for generating and transmitting a low rate mode OFDM transmission in a first frequency band of the OFDM band; and second transmit chain for generating and transmitting a burst-mode transmission in a second frequency band of the OFDM band, the first frequency band being distinct from the second frequency band. An access channel is provided which is overlaid over the low rate mode transmissions of other users.

US2004/0082356A1 refers to a MIMO WLAN system. The system uses a channel structure with a number of configurable transport channels, supports multiple rates and transmission modes, which are configurable based on channel conditions and user terminal capabilities, employs a pilot structure with several types of pilot (e.g. beacon, MIMO, steered reference and carrier pilots) for different functions, implements rate, timing and power control loops for proper system operation, and employs random access for system access by the user terminals, fast acknowledgement, and quick resource assignments. Calibration may be performed to account for differences in the frequency responses of transmit/receive chains at the access point and user terminals. The spatial processing may then be simplified by taking advantage of the reciprocal nature of the downlink and uplink and the calibration.

WO 2005/096538A1 refers to methods and apparatus for flexible spectrum allocation in communication systems. These techniques provide for methods and systems for flexible allocating a shared frequency spectrum to a plurality of users, wherein the spectrum may have a first number of segments, and each segment has a second number of clusters associated with a certain sector/cell. In one aspect, a method of flexibly allocating a shared frequency spectrum to a plurality of users comprises the acts of fixedly assigning a first group of clusters to a second group of users, such that the first group of users stay fixed to the assigned clusters, and assigning a second group of clusters to a second group of users, such that the second group of users hop within the assigned clusters.

Exemplary embodiments of the present invention address at least the above problems and/or disadvantages and provide at least the advantages described below.

It is the object of the present invention to provide an improved apparatus and method for selectively scheduling channels in mobile communication systems adopting orthogonal frequency division multiple access, wherein efficient support is given to the selective schedule of channels in mobile communication systems adopting orthogonal frequency division multiplexing.

This object is solved by the subject matter of the independent claims.

Preferred embodiments are defined by the dependent claims.

It is aspect of the present invention to provide an apparatus and a method for selectively scheduling channels in mobile communication systems adopting Orthogonal Frequency Division Multiple Access wherein scheduling of channels is performed, while pilot signals for the uplink signal-to-noise ratio are being transmitted from a number of terminals, in mobile communication systems adopting Orthogonal Frequency Division Multiple Access.

Furthermore, it is another aspect of the present invention to provide an apparatus and a method for selectively scheduling channels in mobile communication systems adopting Orthogonal Frequency Division Multiple Access, wherein the total uplink system capacity is increased by adaptively controlling the volume amount of uplink overhead in accordance with the conditions of the system.

In order to accomplish the above, a method for selectively scheduling channels at a base station in a mobile communication system adopting Orthogonal Frequency Division Multiple Access according to an exemplary embodiment of the present invention, includes, in requiring a terminal to transmit a designated pilot, selectively scheduling channels after receiving the pilot from the terminal within a specified frequency band or over the whole frequency band, requiring the terminal to transmit data having a result of the scheduling therewith, and receiving from the terminal the data having the result of the scheduling therewith.

In order to accomplish the above, an apparatus for selectively scheduling channels at a base station in a mobile communication system adopting Orthogonal Frequency Division Multiple Access, according to an exemplary embodiment of the present invention, includes a receiving unit for receiving a pilot from a terminal within a specified frequency band or over the whole frequency band after the base station requires the terminal to transmit the pilot, a scheduling unit for selectively scheduling channels with the pilot which is received by the receiving unit within a specified frequency band or over the whole frequency band, and a unit for transmitting scheduling information and for requiring the terminal to transmit data having a result of the scheduling therewith.

In order to accomplish the above, an apparatus for selectively scheduling channels in a mobile communication system adopting Orthogonal Frequency Division multiplexing according to an exemplary embodiment of the present invention includes in an apparatus for selectively scheduling channels at a terminal in a mobile communication system adopting Orthogonal Frequency Division Multiple Access, a unit for receiving from a base station scheduling information which is necessary to transmit the pilot, and a unit for transmitting a pilot to the base station on the basis of the scheduling information.

### BRIEF DESCRIPTION OF THE DRAWINGS

The above object and other aspects, features, and advantages of the present invention will be more apparent from the following detailed description taken in conjunction with the accompanying drawings, in which:
FIG. 1 is a block diagram illustrating a transmitter in mobile communication systems adopting a general Orthogonal Frequency Division Multiplexing;
FIG. 2 is a block diagram illustrating a receiver in she mobile communication systems adopting the general Orthogonal Frequency Division Multiplexing;
FIG. 3 illustrates an example of selectively scheduling channels on the time axis in the mobile communication systems adopting the general Orthogonal Frequency Division Multiplexing;
FIG. 4 illustrates an example of selectively scheduling channel on the frequency axis in the mobile communication systems adopting the general Orthogonal Frequency Division Multiplexing.
FIG. 5 is a block diagram illustrating a transmitter-receiver at a base station according to an exemplary embodiment of the present invention;
FIG. 6 is a block diagram illustrating a transmitter-receiver at a terminal according to an exemplary embodiment of the present invention;
FIG. 7 illustrates a control flowchart showing selectively scheduling uplink channels in a mobile communication system adopting Orthogonal Frequency Division Multiple Access according to an exemplary embodiment of the present invention;
FIG. 8 illustrates a control flowchart showing selectively scheduling uplink channels in a mobile communication system adopting Orthogonal Frequency Division Multiple Access according to another exemplary embodiment of the present invention;
FIG. 9 is a view illustrating the structure of a uplink frame according to an exemplary embodiment of the present invention; and
FIG. 10 is a view illustrating the structure of a uplink frame according to another exemplary embodiment of the present invention.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness. Hereinafter, exemplary embodiments of the present invention will be described in detail with reference to the accompanying drawings.

According to an exemplary embodiment of the present invention, there are two kinds of pilots in a mobile communication system adopting Orthogonal Frequency Division Multiple Access. They are a channel estimate pilot and a Signal-to-Noise Ratio (SNR) measure pilot. In support of selectively scheduling uplink channels for an uplink data transmission, scheduling is also performed while the signal-to-noise ratio measure pilot of a terminal is being transmitted. The channel estimate pilot represents a pilot for coherent demodulation during an uplink data transmission. The signal-to-noise ratio measure pilot represents a pilot only for selectively scheduling channels regardless of demodulation during data transmission.

In conventional mobile communication systems, an uplink scheduling represents scheduling for data transmission of a terminal. However, according to an exemplary embodiment of the present invention, a base station not only carries out scheduling for a uplink data transmission of a terminal, but also carries out scheduling for an uplink pilot transmission.

Furthermore, according to an exemplary embodiment of the present invention, a structure of an uplink frame is provided to efficiently support selective scheduling of uplink channels.

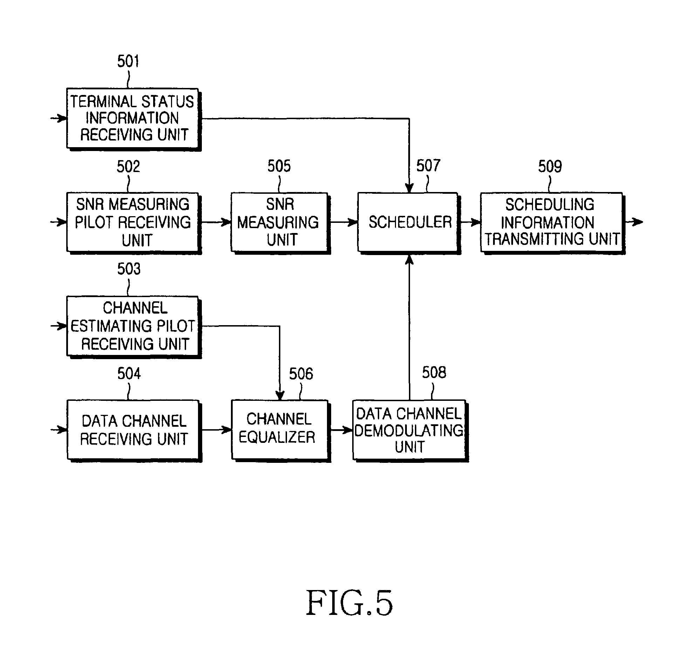

First of all, a transmitter-receiver at a base station in support of selectively scheduling uplink channels according to an exemplary embodiment of the present invention will be described with reference to FIG. 5. FIG. 5 is a block diagram illustrating a transmitter-receiver at a base station according to an exemplary embodiment of the present invention.

Referring to FIG. 5, a unit for receiving terminal status information 501 receives status information of a terminal, which is backward transmitted from the terminal, and transmits the received status information to a scheduler 507.

A receiving unit 502 receives a pilot from the terminal for measuring Signal-to-Noise Ratio, and outputs the received pilot to a Signal-to-Noise Ratio (SNR) measuring unit 505.

The SNR measuring unit 505 measures the signal-to-noise ratio of an uplink channel of a respective terminal.

A receiving unit 503 receives a pilot from the terminal, which is necessary to demodulate data channel, estimates an uplink channel of the terminal, and transmits an estimated uplink channel to a channel equalizer 506.

A data channel receiving unit 504 receives data from the terminal. An output of the data channel receiving unit 504 is input to the channel equalizer 506.

The channel equalizer 506 receives a channel estimation value from the unit 503 that receives the pilot for estimating a channel, performs a channel-equalizing function while receiving an output of the unit 504 that receives data from the terminal and feeds an output thereof to a unit 508 for demodulating the data channel.

The demodulating unit 508 demodulates the data from the terminal while receiving the output of the channel equalizer 506.

Meanwhile, the scheduler 507 performs a designated function of scheduling while receiving an output of the unit 501 for receiving status information of the terminal, an output of the SNR measuring unit 505, and an output of the demodulating unit 508 for the terminal data. Namely, the scheduler 507 performs a function of selectively scheduling channels as provided in an exemplary embodiment of the present invention. In performing the scheduling function, the scheduler 507 determines when data may be transmitted from the terminal, and by which orthogonal resources the data from the terminal may be transmitted. A result of the scheduling is sent to a unit 509 for transmitting the scheduling information.

The unit 509 for transmitting the scheduling information transmits the result of scheduling to a terminal.

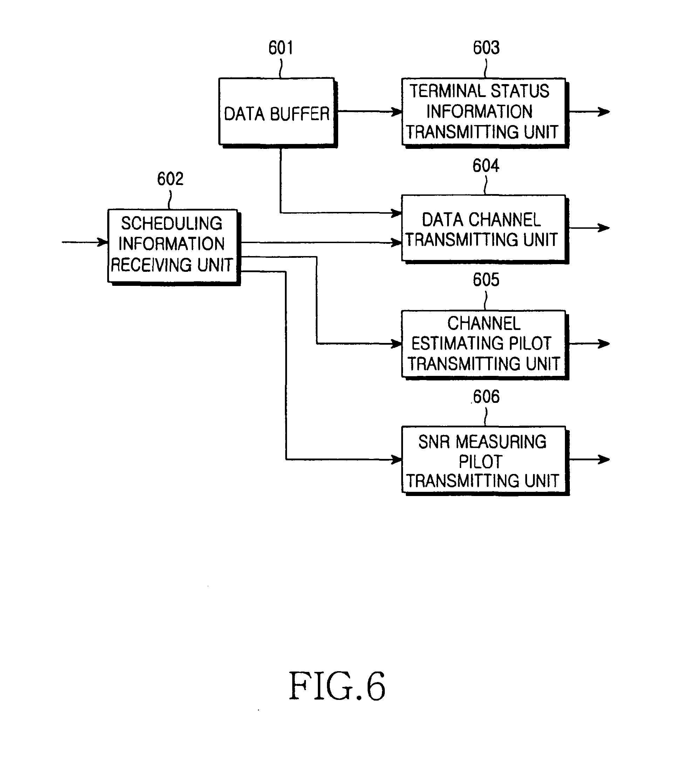

FIG. 6 is a block diagram illustrating a transmitter-receiver at a terminal that supports selectively scheduling uplink channels according to an exemplary embodiment of the present invention.

Referring to FIG. 6, a data buffer 601 represents a data buffer at a terminal. Information on memory capacity of the data buffer 601 is transmitted to a base station by a unit 603 that is provided for transmitting status information of the terminal. Although not illustrated in FIG. 6, when receiving other status information such as transmission power of the terminal, the unit 603 may transmit the status information on transmission power of the terminal together with status information on memory capacity of the data buffer. The unit 603 may also transmit other status information beyond that of transmission power and memory capacity.

A unit 602 for receiving information on scheduling receives the information which is transmitted by the scheduling information transmitting unit 509 of the base station. The information on scheduling that the unit 602 receives may include scheduling information on data transmission, on channel estimating pilot transmission which is necessary to demodulate data, on pilot transmission which is necessary to measure the signal-to-noise ratio, and the like. The scheduling information on data transmission, among additional information received by the unit 602, is input to a unit 604 for transmitting channel data, so that the unit 604 transmits data in a designated process. The designated process is the same as a transmitting process in a mobile communication system adopting a general Orthogonal Frequency Division Multiple Access, which was described with reference to FIG. 1. Among the information which was received by the scheduling information receiving unit 602, the scheduling information on channel estimating pilot transmission, which is necessary to demodulate data, is input to a unit 605 for transmitting a pilot for estimating a channel, so that the unit 605 transmits the channel estimating pilot in a designated process. This process is the same as the transmitting process used in a mobile communication system adopting a general Orthogonal Frequency Division Multiple Access which was described with reference to FIG. 1. Among the information which was received by the scheduling information receiving unit 602, the scheduling information on the pilot transmission, which is necessary to measure signal-to-noise ratio, is input to a unit 606 for transmitting a pilot for measuring the signal-to-noise ratio, so that the unit 606 transmits the pilot for measuring the signal-to-noise ratio in a designated process. Here, the process is the same as the transmitting process in a mobile communication system adopting a general Orthogonal Frequency Division Multiple Access, which was described with reference to FIG. 1.

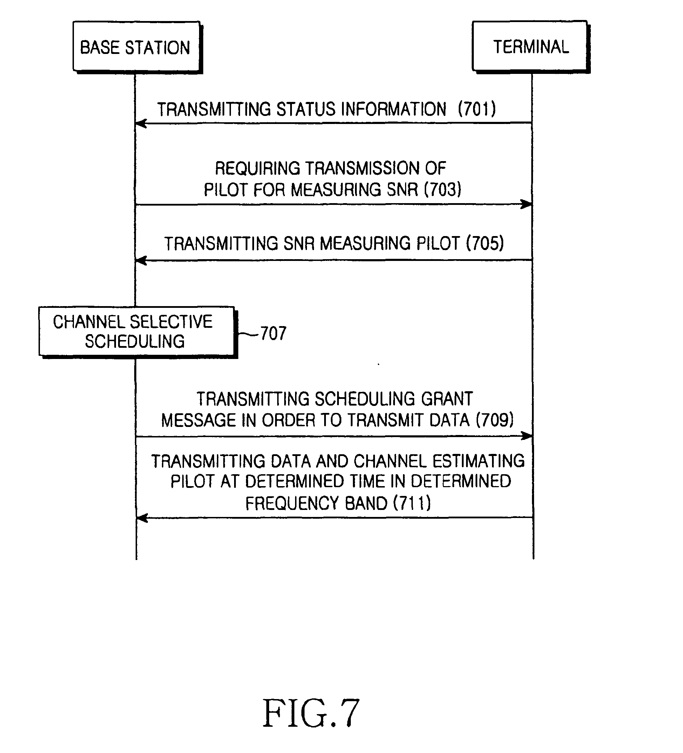

FIG. 7 illustrates a control flowchart showing selectively scheduling uplink channels in a mobile communication system adopting Orthogonal Frequency Division Multiple Access according to an exemplary embodiment of the present invention. Hereinafter, referring to FIG. 7, a control operation will be described in detail when uplink channels are selectively scheduled in mobile communication systems adopting Orthogonal Frequency Division Multiple Access according to an exemplary embodiment of the present invention.

When there exists data to transmit from the data buffer 601, in step 701 the unit 603 for transmitting status information of a terminal transmits the status information of the terminal to a base station. The status information may include the memory capacity of the terminal, the transmission power of the terminal, and so forth. In receiving the status information of the terminal, in step 703 the base station does not allow the terminal to transmit data immediately. Instead, in support of selectively scheduling channels, in step 703 the base station requires the terminal to transmit a pilot for measuring the signal-to-noise ratio.

At this time, the base station transmits to the terminal a grant message concerning the transmission of the pilot for measuring the signal-to-noise ratio within a specified frequency band or over the whole frequency band.

Table 1 represents an example of an exemplary embodiment of a grant message format concerning the transmission of the pilot. As the number of bits which are illustrated in Table 1 are only an example, it is clear that details of the number of bits can vary according to systems.

**Table 1.**

| Field | Number of bits |
|---|---|
| Type | 4 bits |
| MAC ID | 8 bits |
| Channel ID | 6 bits |
| Period | 3 bits |

Referring to Table 1, Type represents the type of message. Namely, the Type is the queue of bits with which the message can be recognized as the grant message concerning the transmission of the pilot. MAC ID represents an identifier of the terminal. Channel ID represents a band in which the pilot for measuring the signal-to-noise ratio is transmitted. According to the value of the field, the pilot for the signal-to-noise ratio could be transmitted over the whole frequency band backward or could be transmitted within a specified frequency band backward. Period represents a period by which the pilot for measuring the signal-to-noise ratio is transmitted. It will be noted that a certain field can be added or omitted in items of Table 1.

After having received the grant message concerning the transmission of the pilot for measuring the signal-to-noise ratio, in step 705 the terminal transmits the pilot for measuring the signal-to-noise ratio within a specified frequency band or over the whole frequency band. After having received from the terminal the pilot for measuring the signal-to-noise ratio, in step 707 the base station measures the signal-to-noise ratio of an uplink channel with the pilot for measuring the signal-to-noise ratio, and performs a designated process in which channels are selectively scheduled with the measured signal-to-noise ratio, and with the status information of the terminal which includes both the memory capacity of a data buffer and information on transmission power of the terminal. The designated process of scheduling determines when the data may be transmitted from the terminal, and by which orthogonal resources the data from the terminal may be transmitted. Based on the result of scheduling, in step 709 the base station transmits to the terminal a scheduling grant message concerning transmission of data. An exemplary feature of the scheduling grant message concerning the transmission of the data is that the scheduling grant message includes not only data transmission from the terminal, but also the transmission of the pilot which is required for coherent demodulation (in other words, the pilot for estimating the channel). However, it must be kept in mind that by a prescribed rule, a transmission of information on the transmission of the pilot for estimating the channel which is required for the coherent demodulation would be omitted in a case where the transmission of the pilot required for demodulation is already mapped to the scheduling grant message concerning the data transmission. In step 711, the terminal, which has received the scheduling grant message in step 709, transmits data within a designated frequency band at a designated time wherein both the time and the frequency are determined by the scheduling grant message, and transmits along with the data the pilot for estimating the channel which is required for the coherent demodulation. The transmission of the pilot for measuring the signal-to-noise ratio which was performed in step 705 may be included in step 711.

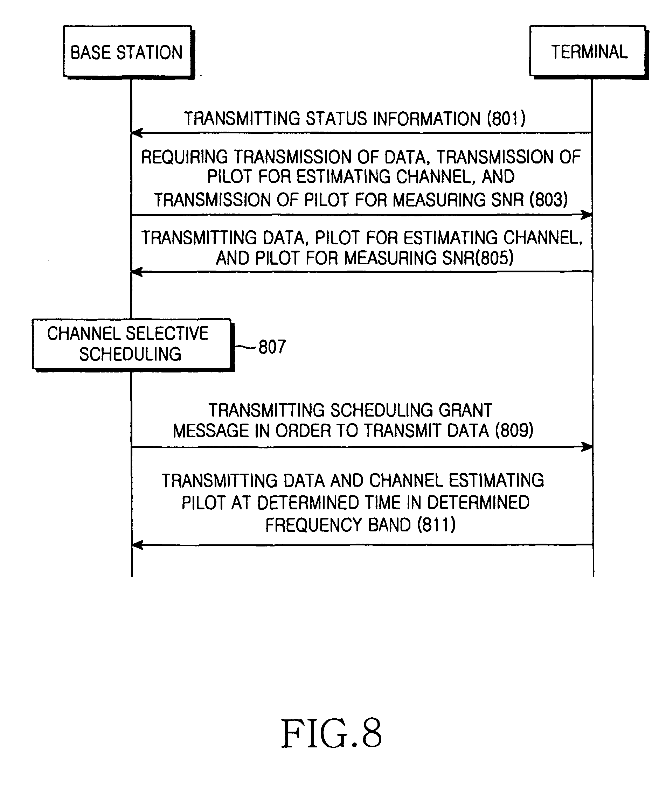

FIG. 8 illustrates a control flowchart showing selectively scheduling uplink channels in a mobile communication system adopting Orthogonal Frequency Division Multiple Access according to another exemplary embodiment of the present invention.

Hereinafter, referring to FIG. 8, a control operation will be described in detail when uplink channels are selectively scheduled in a mobile communication system adopting Orthogonal Frequency Division Multiple Access according to another exemplary embodiment of the present invention.

When a terminal has data to transmit from a data buffer 601 thereof, in step 801 a unit 603 for transmitting status information of the terminal transmits the status information to a base station. The status information may include the memory capacity of a data buffer of the terminal, information on electric power of the terminal, and the like. When receiving the status information of the terminal, in step 803, the base station permits the terminal to transmit data immediately. Then, acknowledgement (in other words, permission) of the data transmission, to which selective scheduling of channels is not applied, corresponds to permission of data transmission which is produced by a designated scheme of scheduling. The acknowledgement of the data transmission is done by transmitting a designated grant message. The grant message may include information on data transmission to the terminal, information on transmission of a pilot for estimating a channel, information on transmission of a pilot for measuring the signal-to-noise ratio in support of selectively scheduling channels at the next time, and the like. In step 805, the terminal which receives the grant message transmits the data, the pilot for estimating the channel, and the pilot for measuring the signal-to-noise ratio in support of selectively scheduling channels at a subsequent time. In step 807, the base station, which has received from the terminal the pilot for measuring the signal-to-noise ratio, performs a designated process in which channels are selectively scheduled. The designated process of scheduling determines when the data may be transmitted from the terminal, and by which orthogonal resources the data from the terminal may be transmitted. Based on the result of scheduling, in step 809 the base station transmits to the terminal a scheduling grant message concerning the transmission of data. An exemplary feature of the scheduling grant message concerning the transmission of the data is that the scheduling message includes not only data transmission from the terminal, but also the transmission of the pilot for estimating the channel which is required for data demodulation. However, it must be kept in mind that by a prescribed rule, a transmission of information on the transmission of the pilot for estimating the channel which is required for the data demodulation would be omitted in a case where the transmission of the pilot required for demodulation is already mapped to the scheduling grant message concerning the data transmission. In step 811, the terminal, which has received the scheduling grant message in step 809, transmits data within a designated frequency band at a designated time wherein both the time and the frequency are determined by the scheduling grant message, and transmits, along with the data, the pilot for estimating the channel which is required for the data demodulation. The transmission of the pilot for measuring the signal-to-noise ratio which has been performed in step 805 may be included in step 811.

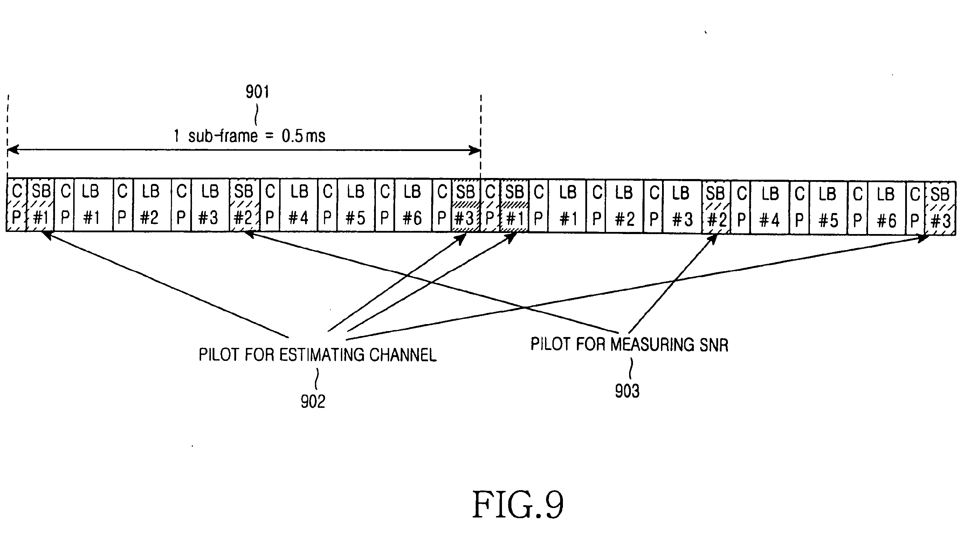

FIG. 9 is a view illustrating an exemplary embodiment of the structure of an uplink frame which is so configured that the frame may efficiently support the uplink channels to be selectively scheduled.

Referring to FIG. 9, reference numeral 901 illustrates a subframe. The subframe 901 represents the minimum amount of time for which a packet is transmitted. A subframe 901 consists of three Short Blocks (SBs) and six Long Blocks (LBs). In the above, three Short Blocks of a subframe are illustrated as SB#1, SB#2, and SB#3, respectively, and six Long Blocks thereof are illustrated as LB#1, LB#2, LB#3, LB#4, LB#5, and LB#6, respectively. Short blocks are used in order to transmit pilots, and long blocks are used in order to transmit data. Furthermore, both short blocks and long blocks have Cyclic Prefixes (CPs) attached thereto. Among three short blocks which are included in a subframe, both an SB#1 and an SB#3 are used to transmit pilots 902 for estimating channels, and an SB#2 is used to transmit the pilot 902 for measuring the signal-to-noise ratio. It will be noted that that the short blocks may be located at positions other than in FIG. 9.

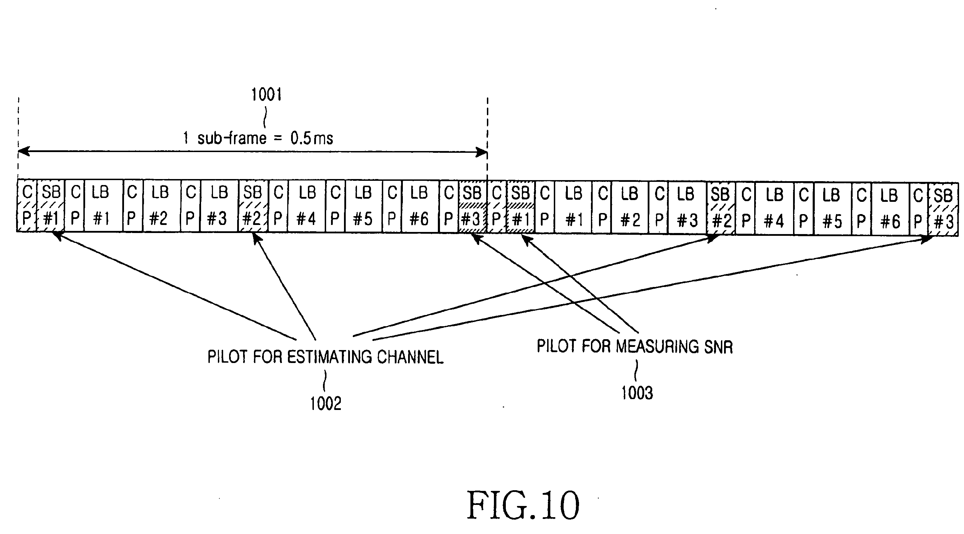

FIG. 10 is a view illustrating another exemplary embodiment of the structure of a uplink frame which is so configured that the frame may support the uplink channels to be scheduled selectively.

Referring to FIG. 10, an overall configuration of the uplink frame is similar to that illustrated in FIG. 9. However there are differences in that adjacent short blocks in FIG. 10 are used to transmit the pilot 1003 for measuring the signal-to-noise ratio. As illustrated in FIG. 10, both an SB#3 and an SB#1 which is adjacent to the SB#3, are used to transmit the pilot 1003 for measuring the signal-to-noise ratio. Adjacent short blocks are used to transmit the pilots 1003 for measuring the signal-to-noise ratio in order that a level of interference plus noise may be easily estimated by measuring a difference between the levels of received signals of the adjacent short blocks, and in order that the final measurement of the signal-to-noise ratio may become easier and more accurate.

The merits and effects of exemplary embodiments, as disclosed and as so configured to operate above, will be described as follows.

According to exemplary embodiments of the present invention, in the mobile communication systems which adopt Orthogonal Frequency Division Multiplexing Access, the process of scheduling is performed with a pilot for measuring the uplink signal-to-noise ratio, and then the volume amount of the uplink overheads may be adaptively controlled in harmony with the states of the system, so that reverse system capacity can be increased.

While the invention has been shown and described with reference to a certain preferred embodiment thereof, it will be understood by those skilled in the art that various changes in form and details may be made therein without departing from the scope of the invention as defined by the appended claims.

## Claims

1. A method for data transmission in a communication system adopting Orthogonal Frequency Division Multiple Access, the method comprising:
receiving by a terminal, information, transmitted from a base station, for transmission of a pilot signal for scheduling;
receiving by the terminal, a scheduling grant, transmitted from the base station, for data transmission; and
transmitting (711) by the terminal said data and a pilot for demodulation according to the scheduling grant and the pilot signal according to the information,
wherein the data is transmitted within one sub-frame unit, and the pilot for demodulation of at least one of data and the pilot signal for scheduling are transmitted within the one sub-frame unit by applying a Time Division Multiplexing method.

2. The method of claim 1, wherein the information comprises frequency band information.

3. The method of claim 2, wherein the frequency band information indicates a specified frequency band or the whole frequency band.

4. The method of claim 1, wherein the information comprises transmission duration information.

5. The method of claim 1, wherein the pilot for demodulation of data and the pilot signal for scheduling are transmitted on different OFDM symbols within one sub-frame unit.

6. The method of claim 1, wherein the pilot signal for scheduling is transmitted by using OFDM symbols located at a predetermined position within one sub-frame unit (1001).

7. The method of claim 1, wherein the information for transmission of a pilot signal of a terminal for scheduling consists of the terminal's ID, frequency band information for transmission of the pilot signal for scheduling and information representative of transmission time for transmission of a pilot signal of a terminal for scheduling.

8. An apparatus for data transmission in a communication system adopting Orthogonal Frequency Division Multiple Access, the apparatus comprising:
a receiver (602) for receiving at a terminal, information, transmitted from a base station,
for transmission of a pilot signal for scheduling and a scheduling grant transmitted from the base station, for data transmission, and
a transmitter (604, 605) for transmitting, from the terminal, said data and a pilot for demodulation according to the scheduling grant and the pilot signal according to the information,
wherein the transmitter is adapted to transmit the data within one sub-frame unit, and
the pilot for demodulation of at least one of data and the pilot signal for scheduling are transmitted within the one sub-frame unit by applying a Time Division Multiplexing method.

9. The apparatus of claim 8, wherein the terminal is adapted to operate according to one of claims 2 to 7.

10. A method for data transmission in a communication system adopting Orthogonal Frequency Division Multiple Access, the method comprising:
transmitting, at a base station, information for transmission of a pilot signal of a terminal for scheduling;
transmitting, by the base station, a scheduling grant for data transmission of the terminal, and
receiving, by the base station, said data and a pilot for demodulation transmitted from the terminal according to the scheduling grant, and the pilot signal transmitted from the terminal according to the information,
wherein the data is received within one sub-frame unit, and the pilot for demodulation of at least one of data and the pilot signal for scheduling are received within the one sub-frame unit by applying a Time Division Multiplexing method.

11. The method of claim 10, adapted to perform according to one of claims 2 to 7.

12. An apparatus for data transmission in a communication system adopting Orthogonal Frequency Division Multiple Access, the apparatus comprising:
a transmitter (509) for transmitting, at a base station, information for transmission of a pilot signal of a terminal for scheduling and a scheduling grant for data transmission of the terminal; and
a receiver (503, 504) for receiving, at the base station, said data with a pilot for demodulation transmitted from the terminal according to the scheduling grant and the pilot signal transmitted from the terminal according to the information,
wherein the receiver is adapted to receive the data within one sub-frame unit, and the pilot for demodulation of at least one of data and the pilot signal for scheduling are transmitted within the one sub-frame unit by applying a Time Division Multiplexing method.

13. The apparatus of claim 12, wherein the base station is adapted to operate according to one of claims 2 to 7.

## Patentansprüche

1. Verfahren zur Datenübertragung in einem Kommunikationssystem, in dem OFDMA (Orthogonal Frequency Division Multiple Access) eingesetzt wird, wobei das Verfahren umfasst:
Empfangen von Informationen, die von einer Basisstation gesendet werden, zum Senden eines Pilotsignales für Scheduling, durch ein Endgerät;
Empfangen eines Scheduling-Grant für Datenübertragung, das von der Basisstation gesendet wird, durch das Endgerät; und
Senden (711) der Daten und eines Piloten für Demodulation gemäß dem Scheduling-Grant und des Pilotsignals gemäß den Informationen, durch das Endgerät;
wobei die Daten in einer Subframe-Einheit gesendet werden, und der Pilot für Demodulation von mindestens einer Dateninformation und das Pilotsignal für Scheduling in der einen Subframe-Einheit durch Anwenden eines Zeitmultiplexverfahrens gesendet werden.

2. Verfahren nach Anspruch 1, wobei die Informationen Frequenzbandinformationen enthalten.

3. Verfahren nach Anspruch 2, wobei die Frequenzbandinformationen ein spezifisches Frequenzband oder das gesamte Frequenzband anzeigen.

4. Verfahren nach Anspruch 1, wobei die Informationen Übertragungsdauerinformationen enthalten.

5. Verfahren nach Anspruch 1, wobei der Pilot für Demodulation der Daten und das Pilotsignal für Scheduling auf verschiedenen OFDM-Symbolen innerhalb einer Subframe-Einheit gesendet werden.

6. Verfahren nach Anspruch 1, wobei das Pilotsignal für Scheduling unter Verwendung von OFDM-Symbolen gesendet wird, die an einer vorgegebenen Position in einer Subframe-Einheit (1001) angeordnet sind.

7. Verfahren nach Anspruch 1, wobei die Informationen für das Senden eines Pilotsignals eines Endgeräts für Scheduling aus der ID des Endgeräts, Frequenzbandinformationen für das Senden des Pilotsignals für Scheduling und Informationen besteht, welche die Sendezeit für das Senden eines Pilotsignals eines Endgeräts für Scheduling enthalten.

8. Vorrichtung zur Datenübertragung in einem Kommunikationssystem, in dem OFDMA (Orthogonal Frequency Division Multiple Access) eingesetzt wird, wobei die Vorrichtung umfasst:
einen Empfänger (602) zum Empfangen von Informationen an einem Endgerät, die von einer Basisstation gesendet werden, für das Senden eines Pilotsignals für Scheduling und eines Scheduling-Grant für die Datenübertragung, das von der Basisstation gesendet wird, und
einen Sender (604, 605) zum Senden der Daten und eines Piloten für Demodulation gemäß dem Scheduling-Grant und des Pilotsignals gemäß den Informationen,
von dem Endgerät,
wobei der Sender dazu eingerichtet ist, die Daten in einer Subframe-Einheit zu senden, und der Pilot für Demodulation von mindestens einer Dateninformation und das Pilotsignal für Scheduling in der einen Subframe-Einheit durch Anwenden eines Zeitmultiplexverfahrens gesendet werden.

9. Vorrichtung nach Anspruch 8, wobei das Endgerät dazu eingerichtet ist, nach einem der Ansprüche 2 bis 7 zu arbeiten.

10. Verfahren zur Datenübertragung in einem Kommunikationssystem, in dem OFDMA (Orthogonal Frequency Division Multiple Access) eingesetzt wird, wobei das Verfahren umfasst:
Senden von Informationen zum Senden eines Pilotsignals eines Endgeräts für Scheduling, an einer Basisstation;
Senden eines Scheduling-Grant für Datenübertragung des Endgeräts, durch die Basisstation, und
Empfangen der Daten und eines Piloten für Demodulation, die von dem Endgerät gemäß dem Scheduling-Grant gesendet werden, und des Pilotsignals, das von dem Endgerät gemäß der Informationen gesendet wird, durch die Basisstation,
wobei die Daten in einer Subframe-Einheit empfangen werden, und der Pilot für Demodulation von mindestens einer Dateninformation und das Pilotsignal für Scheduling in der einen Subframe-Einheit durch Anwenden eines Zeitmultiplexverfahrens empfangen werden.

11. Verfahren nach Anspruch 10, das zur Durchführung des Verfahrens nach einem der Ansprüche 2 bis 7 eingerichtet ist.

12. Vorrichtung zur Datenübertragung in einem Kommunikationssystem, in dem OFDMA (Orthogonal Frequency Division Multiple Access) eingesetzt wird, wobei die Vorrichtung umfasst:
einen Sender (509) zum Senden von Informationen zum Senden eines Pilotsignals eines Endgeräts für Scheduling und eines Scheduling-Grant für Datenübertragung des Endgeräts, an einer Basisstation; und
einen Empfänger (503, 504) zum Empfangen der Daten mit einem Piloten für Demodulation, die von dem Endgerät gemäß dem Scheduling-Grant gesendet werden, und des Pilotsignals, das von dem Endgerät gemäß der Informationen gesendet wird, an der Basisstation,
wobei der Empfänger dazu eingerichtet ist, die Daten in einer Subframe-Einheit zu empfangen, und der Pilot für Demodulation von mindestens einer Dateninformation und das Pilotsignal für Scheduling in der einen Subframe-Einheit durch Anwenden eines Zeitmultiplexverfahrens gesendet werden.

13. Vorrichtung nach Anspruch 12, wobei die Basisstation dazu eingerichtet ist, nach einem der Ansprüche 2 bis 7 zu arbeiten.

## Revendications

1. Procédé de transmission de données dans un système de communication adoptant un accès multiple par répartition orthogonale de fréquence, le procédé comprenant :
la réception par un terminal d'informations transmises par une station de base, pour la transmission d'un signal pilote pour programmation ;
la réception par le terminal d'une autorisation de programmation, transmise par la station de base, pour la transmission de données ; et
la transmission (711) par le terminal desdites données et d'un pilote pour démodulation conformément à l'autorisation de programmation et du signal pilote conformément aux informations,
dans lequel les données sont transmises dans une unité de sous-trame et le pilote pour démodulation au moins des données ou du signal pilote pour programmation est transmis à l'intérieur de l'unité de sous-trame en appliquant un procédé de multiplexage par répartition dans le temps.

2. Procédé selon la revendication 1, dans lequel les informations comprennent des informations de bande de fréquence.

3. Procédé selon la revendication 2, dans lequel les informations de bande de fréquence indiquent une bande de fréquence spécifiée ou la totalité de la bande de fréquence.

4. Procédé selon la revendication 1, dans lequel les informations comprennent des informations de durée de transmission.

5. Procédé selon la revendication 1, dans lequel le pilote pour démodulation de données et le signal pilote pour programmation est transmis sur des symboles OFDM différents dans une unité de sous-trame.

6. Procédé selon la revendication 1, dans lequel le signal pilote pour programmation est transmis en utilisant des symboles OFDM situés dans une position prédéterminée dans une unité de sous-trame (1001).

7. Procédé selon la revendication 1, dans lequel les informations pour la transmission d'un signal pilote d'un terminal pour programmation sont constituées de l'identifiant du terminal, d'informations de bande de fréquence pour la transmission du signal pilote pour programmation et d'informations représentatives du temps de transmission pour la transmission d'un signal pilote d'un terminal pour programmation.

8. Appareil de transmission de données dans un système de communication adoptant un accès multiple par répartition orthogonale de fréquence, l'appareil comprenant :
un récepteur (602) pour recevoir au niveau d'un terminal des informations transmises par une station de base, pour la transmission d'un signal pilote pour programmation et d'une autorisation de programmation, transmise par la station de base, pour la transmission de données ; et
un émetteur (604, 605) pour faire transmettre par le terminal lesdites données et un pilote pour démodulation conformément à l'autorisation de programmation et le signal pilote conformément aux informations,
dans lequel l'émetteur est adapté à transmettre les données dans une unité de sous-trame et le pilote pour démodulation au moins des données ou du signal pilote pour programmation est transmis à l'intérieur de l'unité de sous-trame en appliquant un procédé de multiplexage par répartition dans le temps.

9. Appareil selon la revendication 8, dans lequel le terminal est adapté à fonctionner selon l'une des revendications 2 à 7.

10. Procédé de transmission de données dans un système de communication adoptant un accès multiple par répartition orthogonale de fréquence, le procédé comprenant :
la transmission au niveau d'une station de base d'informations pour la transmission d'un signal pilote d'un terminal pour programmation ;
la transmission par la station de base d'une autorisation de programmation pour la transmission de données du terminal ; et
la réception par la station de base desdites données et d'un pilote pour démodulation transmis par le terminal conformément à l'autorisation de programmation et du signal pilote transmis par le terminal conformément aux informations,
dans lequel les données sont reçues dans une unité de sous-trame et le pilote pour démodulation au moins des données ou du signal pilote pour programmation est reçu à l'intérieur de cette unité de sous-trame en appliquant un procédé de multiplexage par répartition dans le temps.

11. Procédé selon la revendication 10, adapté à être exécuté selon l'une des revendications 2 à 7.

12. Appareil de transmission de données dans un système de communication adoptant un accès multiple par répartition orthogonale de fréquence, l'appareil comprenant :
un émetteur (509) pour transmettre, au niveau d'une station de base, des informations pour la transmission d'un signal pilote d'un terminal pour programmation et une autorisation de programmation pour la transmission de données du terminal ; et
un récepteur (503, 504) pour recevoir, au niveau de la station de base lesdites données avec un pilote pour démodulation transmis par le terminal conformément à l'autorisation de programmation et le signal pilote transmis par le terminal conformément aux informations,
dans lequel le récepteur est adapté à recevoir les données dans une unité de sous-trame et le pilote pour démodulation au moins des données ou du signal pilote pour programmation est transmis dans cette unité de sous-trame en appliquant un procédé de multiplexage par répartition dans le temps.

13. Appareil selon la revendication 12, dans lequel la station de base est adaptée à fonctionner selon l'une des revendications 2 à 7.
